# EUROPEAN PATENT APPLICATION

(11) **EP 2 642 135 A1**
(43) Date of publication of application: **25.09.2013**
(21) Application number: 12460037.0
(22) Date of filing: 28.06.2012
(51) Int. Cl.: F16B 1/00, F16B 37/14

(54) **A rotation indicator for a vehicle wheel nut**

(30) Priority: 19.03.2012 PL 39850612
(71) Applicant: Maciejewski, Krzysztof, 62-020 Swarzedz (PL)
(72) Inventor: Maciejewski, Krzysztof, 62-020 Swarzedz (PL)
(74) Representative: Golebniak, Andrzej

(57) **Abstract**

The subject of the invention is a rotation indicator for a vehicle wheel nut incorporating an indicating element and a wheel nut protective cap, the said indicating element having an annular body and an indicating part integrated with the said annular body, whereas the protective cap incorporates a cylindrical body whose one side is closed with a top wall, most beneficially a rounded one, and whose other, open side incorporates a flange. According to the invention, the annular body **(3)** of the indicating element **(1)** incorporates a plurality of equispaced protrusions **(5)** in its external circumference, whereas the annular flange **(7)** of the protective cover **(2)** incorporates a plurality of equispaced grooves **(**8) in its internal circumference.

## Description

The subject of the invention is a rotation indicator for a vehicle wheel nut, to be used especially in trucks, semi-trucks, cargo vans and passenger cars.

Correctly fixed wheels in vehicles are crucial to the safety of all traffic members. Due to constantly increasing road traffic and due to road conditions, aiming at the safety of drivers and passengers of various vehicles, devices for quick visual assessment of the position of wheel bolts and nuts, for identifying the level of protection of wheel and for warning drivers of possibly loosened wheel bolts and nuts, which may lead to incorrect wear of wheel elements and even to the loss of one or more wheels, have been offered in the automotive market for years. Such devices may be used in all kinds of vehicles.

The patent application GB 2242720 describes a safety indicating device to indicate the displacement between a bolt and a nut in a wheel. The body of the device comprises a bore with a plurality of equispaced grooves enabling the device to be releasably secured, in one or a plurality of positions, on a wheel nut. The device's body is integrated with a protruding pointer.

Whereas, the patent application GB 2325505 A (also published as US 6398312) describes another device, for indicating the relative rotational dislocation between a bolt and a nut of a wheel, whose round body incorporates an indicator, the body incorporates a centrally located bore with a plurality of equispaced grooves or wedges enabling to engage the device releasably on a wheel nut, in one or a plurality of positions.

The body's bore is closed on one of its ends, with a rounded or chamfered top wall, so that the body, as a whole, also serves as a cover for the threaded connection between the bolt and the nut of a wheel. The body also incorporates a flange, serving as a cap area, located in its bottom part, near the open end of the bore. The flange has no grooves. Both the top wall of the body and its bottom cap part protect the threaded connection between the bolt and the nut of a wheel against dirt and dust. The body also incorporates an external rim in the open end and the pointer is formed as the rim's extension.

The bore in the body and the grooves are matched so that the device matches the size of a nut and while it does not become loose during use, it also enables the device to be disengaged from the nut.

The same solution is also know from patent applications GB 2335720 A and GB 2454164 A.

The industrial design publication US D604155 S describes an indicator device for wheel nuts. The device incorporates an annular body with widened rim that extends into a triangular pointer. The annular body's internal wall is shaped as equispaced grooves of triangular shape.

The wheel nut rotation indicator according to the invention incorporates an indicating element and a wheel nut protection cap, the said indicating element having an annular body and an integrated indicating part, whereas the protective cap has an annular body, closed at one side with a top wall, beneficially rounded, with a flange on the other, open end. According to the invention, the annular body of the indicating element incorporates, on its external circumference, a plurality of equispaced protrusions, whereas the protective cap's annular flange incorporates a plurality of equispaced grooves in its internal circumference.

Beneficially, at least three longitudinal protrusions are located axially inside the protective cap's annular body.

Also, beneficially, the protective cap's annular body cross-section is hexagonal in shape.

Also, beneficially, a holder is integrated with the protective cap, on its top.

Most beneficially, the protrusions in the external circumference of the annular body of the indicating element and the grooves in the internal circumference of the annular flange are of triangular shape in cross-section.

Beneficially, the annular body of the indicating element incorporates reinforcing ribs in the bottom part of its internal circumference.

The rotation indicator for a vehicle wheel nut according to the invention shortens the time needed to find out whether the vehicle's wheels are properly fixed and reduces the number of possible errors in maintaining the wheel nuts' correct position. Should any of the wheel nuts get loose, the indicator rotates along with the nit, thus signaling an irregularity. At the same time, the device provides a degree of protection of the bolts and nuts of a wheel against dirt and corrosion.

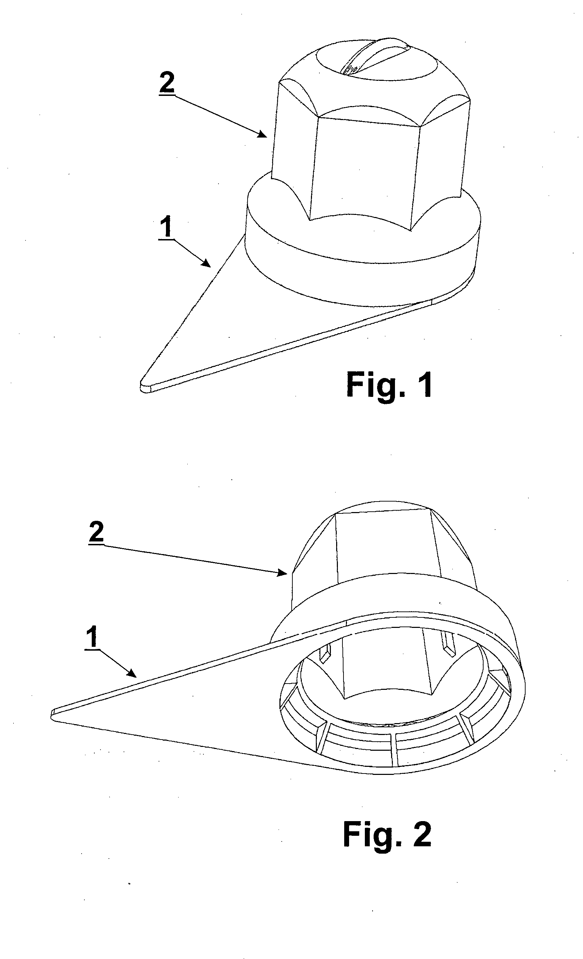

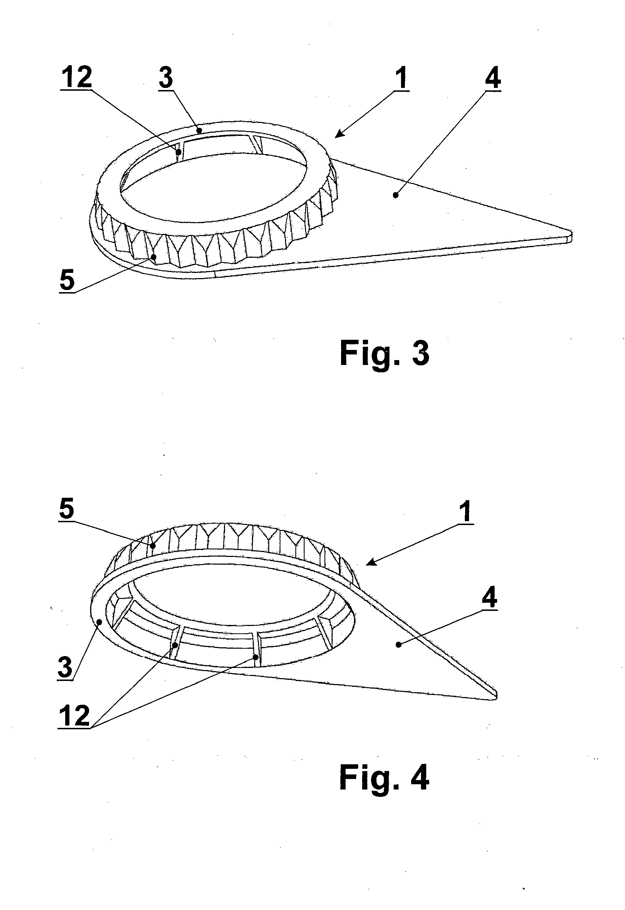

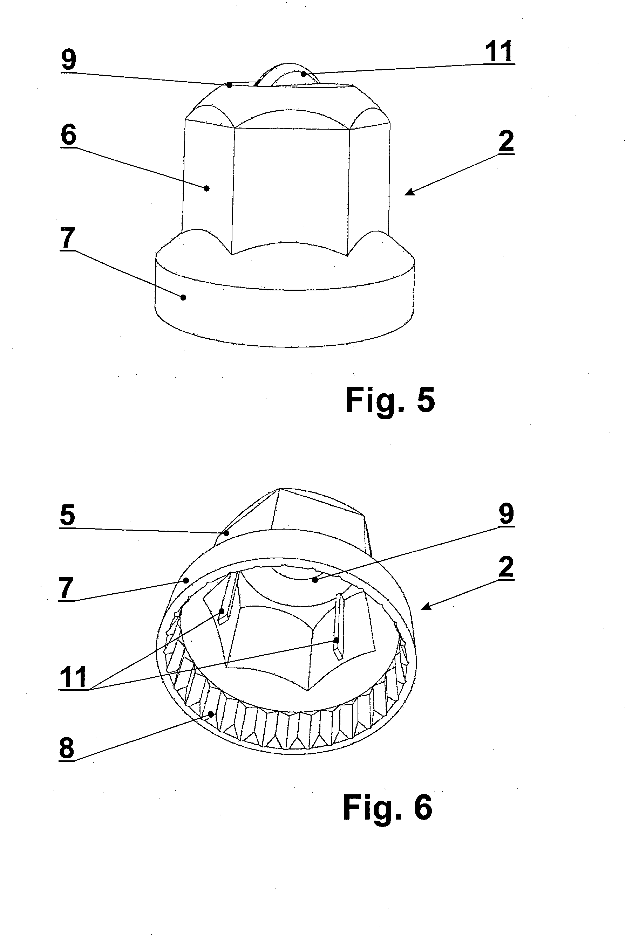

The subject of the invention in the presented embodiment in drawing, whose Fig. 1 shows a rotation indicator of a vehicle wheel nut in a top perspective view, Fig. 2 shows the same indicator in a bottom perspective view, Fig. 3 shows the indicator element in a top perspective view, Fig. 4 shows the same element in a bottom perspective view, Fig. 5 shows the protective cap in a top perspective view and Fig. 6 shows the protective cap in a bottom perspective view.

The rotation indicator for a vehicle wheel nut, according to the invention, incorporates an indicator element **1** and a wheel nut protective cap **2.**

The indicator element **1** incorporates an annular body **3** and a protruding part **4,** integrated with the said body, of triangular shape. The annular body **3** incorporates, in its external circumference, a plurality of equispaced protrusions **5** whose cross-section is of triangular shape. The protective cap **2** incorporates an annular body **6** whose cross-section is hexagonal in shape that is adapted to the shape of the wheel nut, and an annular flange **7** for engaging the protective cap **2** with the indicating element **1.** The annular flange **7** incorporates in its internal circumference a plurality of equispaced grooves **8** whose cross-section is of triangular shape. The shape and number of grooves **8** match the shape and number of protrusions **5** in the external circumference of the body **3** of the indicating element **1.**

The protrusions **5** and grooves **8** enable releasable engagement of the wheel nut rotation indicator in a plurality of rotational positions in relation to the wheel nut.

The cylindrical body **6** of the protective cap **2** is in its top end closed with a rounded top wall **9.**

Inside the cylindrical body **6** of the protective cap **2** three longitudinal protrusions **10,** located axially on the body's walls, on every second wall. The longitudinal protrusions **10** are flexible enough to accommodate the protective cap **2,** and hence the entire indicator device, to wheel nuts of slightly varying size.

On the top of the protective cap **2,** on its top wall, a holder **11** is located, for disengaging the indicator device easily from the wheel nut and to separate the protective cover **2** from the indicator element **1.** Additionally, the indicator element **1** incorporates reinforcing ribs 12 located in the bottom part of the internal circumference of the cylindrical body **3.**

The rotation indicator for a vehicle wheel nut according to the invention may also have other embodiments. In particular, there may be various shapes of cross-section of protrusions **5** of the cylindrical body **3** of the indicator element **1** and the matching grooves **8** in the flange **7** of the protective cap **2.** The differences may also apply to longitudinal protrusions **10** on side walls inside the protective cap **2.** In particular cases these may be unnecessary, but they may also be located on each wall. The cylindrical body **6** of the protective cap **2** may be in the shape of a circle in cross-section. In such a case it is mandatory to locate six or three equispaced, longitudinal protrusions **10** on its circumference.

The wheel nut rotation indicator according to the invention may also be used without the holder **11** located on top of the protective cap **2.**

### List of designations

1 - indicating element
2 - protective cover
3 - annular body
4 - indicating part
5 - protrusion
6 - cylindrical body
7 - annular flange
8 - groove
9 - top wall
10 - longitudinal protrusion
11 - holder
12 - reinforcing ribs

## Claims

1. A rotation indicator for a vehicle wheel nut incorporating an indicating element and a wheel nut protective cap, said indicating element incorporating a cylindrical body and an indicating part integrated with the body, and the protective cap incorporates a cylindrical body, whose one end is closed with a top wall and the other end is open and incorporates a flange **characterized in that** the cylindrical body **(3)** of the indicating element **(1)** incorporates a plurality of equispaced protrusions **(5)** in its external circumference, whereas the cylindrical flange **(7)** of the protective cap **(2)** incorporates a plurality of equispaced grooves **(8)** located in its internal circumference.

2. The indicator according to claim 1, **characterized in that** the cylindrical body **(6)** of the protective cap **(2)** is of hexagonal shape in cross-section.

3. The indicator according to claim 1, **characterized in that** at least three longitudinal protrusions **(10)** are located axially inside the cylindrical body **(6)** of the protective cap **(2).**

4. The indicator according to claim 1, **characterized in that** the protrusions **(5)** in the external circumference of the annular body **(3)** of the indicating element **(1)** and the grooves **(8)** in the external circumference of the annular flange **(7)** of the protective cap **(2)** are, most beneficially, of triangular shape in cross-section.

5. The indicator according to claim 1, **characterized in that** it incorporates a holder **(11)** located on the top of the protective cap **(2),** said holder being integrated with the protective cap's top wall **(9).**

6. The indicator according to claim 1, **characterized in that** the annular body **(3)** the indicating element **(1)** incorporates reinforcing ribs **(12)** located in the bottom part of the said annular body's internal circumference.
